# EUROPÄISCHE PATENTANMELDUNG

(11) **EP 0 671 302 A1**
(43) Veröffentlichungstag der Anmeldung: **13.09.1995**
(21) Anmeldenummer: 95102605.3
(22) Anmeldetag: 24.02.1995
(51) Int. Cl.: B60T 1/08, F16D 65/78, F16D 57/04

(54) **Antriebseinheit mit einem Motor und einem Retarder**

(30) Priorität: 11.03.1994 DE 4408349
(71) Anmelder: VOITH TURBO GMBH & CO. KG, D-74564 Crailsheim (DE)
(72) Erfinder: Vogelsang, Klaus, D-74564 Crailsheim (DE); Edelmann, Peter, D-89522 Heidenheim (DE)
(74) Vertreter: Weitzel, Wolfgang, Dr.-Ing. Patentanwalt

(57) **Zusammenfassung**

Die Erfindung betrifft eine Antriebseinheit (1)
mit einem Motor (2);
mit einem hydrodynamischen Retarder (4);
der Retarder befindet sich mit dem Motor in ständiger Triebverbindung (5);
mit einem Kühlmittelkreislauf (6), dessen Kühlmittel zugleich Arbeitsmittel des Retarders ist;
der Retarder ist in den bremsfreien Perioden als Pumpe des Kühlmittels ausnutzbar.

Die Erfindung ist gekennzeichnet durch die folgenden Merkmale:
der Retarder ist für ständige Vollfüllung ausgelegt;
das Verhältnis des Zulaufquerschnittes (A_{Z}) des Retarders zu dessen Auslaufquerschnitt (A_{A}) liegt beim Bremsbetrieb zwischen 4 und 7 und beim Traktionsbetrieb zwischen 0,5 und 2.

## Beschreibung

Die Erfindung betrifft eine Antriebseinheit mit einem Motor und einem Retarder gemäß dem Oberbegriff von Anspruch 1. Eine solche Antriebseinheit ist aus DE 37 13 580 C1 bekanntgeworden (Dokument 1).

Retarder werden bei schweren Fahrzeugen vor allem eingesetzt, um die insbesondere bei Bremsung aus hoher Fahrgeschwindigkeit anfallende kinetische Bremsenergie aufzunehmen und in Wärme umzusetzen. Als Betriebsflüssigkeit dient in der Regel Öl. Die im Retarder an die Betriebsflüssigkeit übergegangene Wärme muß mittels eines speziellen Wärmetauschers dem Kühlmittel oder der Umgebungsluft zugeführt werden.

Der aus der US-PS 3 720 372 (Dokument 2) bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE-PS 33 01 560 (Dokument 3) ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 1 946 167 (US-PS 3 650 358) bekannter Retarder ist direkt mit der Kurbelwelle einer Verbrennungskraftmaschine verbunden, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist.

Alle bekannten Antriebseinheiten haben die folgenden Nachteile: der Retarder erfüllt seine beiden Funktionen, nämlich diejenige des Bremsens und diejenige des Umwälzens der Kühlflüssigkeit, nicht optimal. Er arbeitet im Bremsbetrieb nicht genügend wirtschaftlich, da er hierbei zu viel Energie in Wärme umsetzt. Beim Retarder gemäß Dokument 2 wird außerdem zu viel Leistung durch Ventilationsverluste verbraucht und in Wärme umgesetzt. Schließlich ist der Bremsbetrieb bei den bekannten Retardern nicht genügend stabil.

Der Erfindung liegt die Aufgabe zugrunde, eine Antriebseinheit gemäß dem Oberbegriff derart zu gestalten, daß der Retarder im Betriebsbetrieb möglichst viel Bremsleistung erzeugt, und zwar auf eine Weise, daß der Fahrbetrieb bzw. Bremsbetrieb ein möglichst stabiler ist, und daß er im Nicht-Bremsbetrieb möglichst wenig Bremsleistung erzeugt.

Diese Aufgabe wird durch die kennzeichnenden Merkmale von Anspruch 1 gelöst. Dadurch, daß bei einer Antriebseinheit, umfassend einen Motor, ein Getriebe und einen hydrodynamischen Retarder, bei der sich der Retarder mit dem Motor in ständiger Triebverbindung befindet und der Retarder als Pumpe des Kühlmittels ausnutzbar ist, der Retarder für ständige Vollfüllung ausgelegt und dem Getriebe vorgeschaltet ist sowie das Verhältnis des Zulaufquerschnittes (A_{Z}) des Retarders zu dessen Auslaufquerschnitt (A_{A}) beim Bremsbetrieb zwischen 4 und 7 und beim Traktionsbetrieb zwischen 0,5 und 2 liegt, wobei die Zu- und Auslaufquerschnitte durch Variation von Ventilquerschnitten realisiert werden können, können eine Reihe vorteilhafter Eigenschaften des Antriebssystems realisiert werden. Zu diesen gehören ein optimales Bremsverhalten - vor allem in Bezug auf die Stabilität des Bremsbetriebes - , die Möglichkeit des Verzichtes auf eine separate Kühlmittelumwälzpumpe im Kühlmittelkreislauf und damit Einsparung an Bauraum, die Nutzung des Retarders als Lüfterantrieb sowie die Nutzung der anfallenden Wärme zur Beheizung des Fahrgastraumes und im wesentlichen eine Vermeidung von Leistungsverlusten im Nicht-Bremsbetrieb, d.h. im Traktionsbetrieb.
Unter Zu- und Ablaufquerschnitt sind dabei auch die Durchflußquerschnitte in den Zulauf- und Ablaufleitungen zu verstehen.

Im allgemeinen werden Retarder im Antriebsstrang des Fahrzeuges entweder in Kraftflußrichtung dem Getriebe nachgeschaltet als selbständige Einheit eingebaut oder in einem Schaltgetriebe integriert. Erfindungsgemäß ist der Retarder jedoch dem Getriebe vorgeschaltet, weshalb unter der Ausdrucksweise "Retarder" ein sogenannter Primärretarder verstanden werden soll, der im Traktionsbetrieb im Kraftfluß dem Getriebe vorgeschaltet ist und dessen Wirkung auf die Antriebsräder vom Schaltzustand abhängig ist.

Die erfindungsgemäße mögliche Änderung des Verhältnisses aus Zulaufquerschnitt und Auslaufquerschnitt in den in Anspruch 1 genannten Verhältnissen zur Realisierung der beiden Aufgaben -Pumpen der Kühlmittelflüssigkeit im Nicht-Bremsbetrieb und stabiles Bremsverhalten im Bremsbetrieb - ist mit einfachen Mittel realisierbar ohne sehr großen steuer- und regelungstechnischen Aufwand. Möglichkeiten einer Bremsmomentenänderung während des Bremsvorganges können durch geeignete Modifizierung der Mittel zur Realisierung der Änderungen der Durchflußquerschnitte ermöglicht werden oder durch zusätzliche bauliche Maßnahmen, beispielsweise die bereits bekannte Statorschaufelradverschiebung.

Vorzugsweise ist der Retarder ständig voll gefüllt. Dies ermöglicht ein optimales Bremsverhalten bei günstigen Retarderabmessungen.
Die erfindungsgemäße Lösung der Aufgabe ist nachfolgend anhand von Figuren erläutert. Es zeigen:
- Fig. 1: eine erfindungsgemäße Antriebseinheit, bei der eine Änderung des Verhältnisses der Zu- und Ablaufquerschnitte des Retarders und die Änderung des Bremsmomentes mittels eines Ventiles erfolgt;
- Fig. 2: eine erfindungsgemäße Antriebseinheit, bei der die Änderung des Bremsmomentes mittels einer Verschiebung des Statorschaufelrades erfolgt.

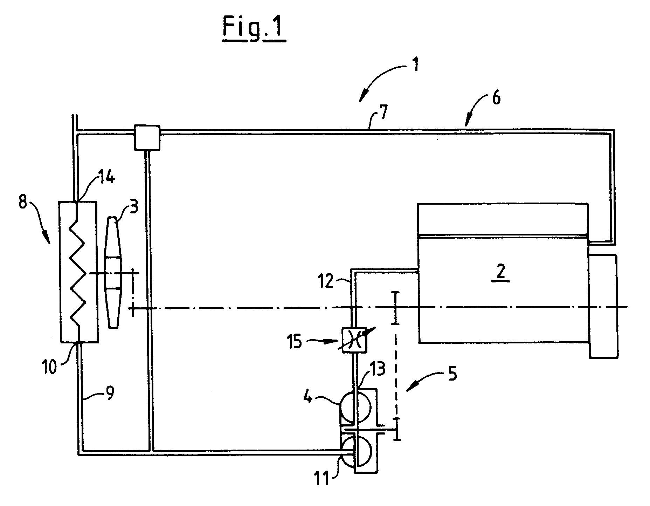

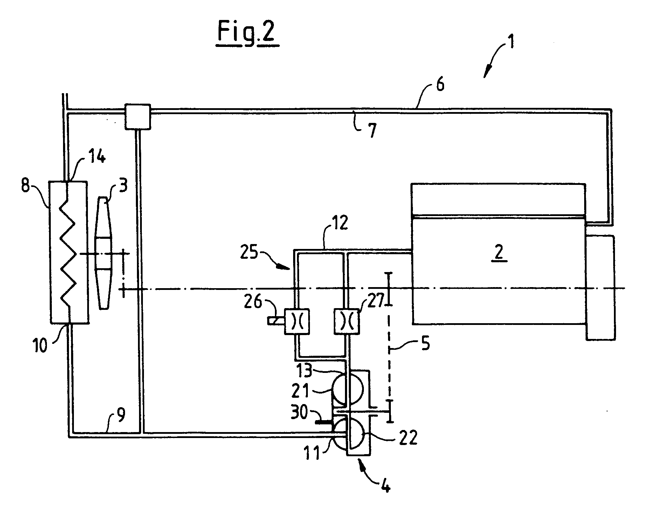

Die Figuren 1 und 2 verdeutlichen lediglich die wesentlichen Bestandteile einer erfindungsgemäß aufgebauten Antriebseinheit. Einrichtungen der Steuer- und Regeltechnik sind ebenfalls nicht mit aufgeführt.

Die Figur 1 verdeutlicht eine erfindungsgemäße Anordnung eines Retarders vor dem Getriebe und die Möglichkeit einer Änderung des Verhältnisses des Zulaufquerschnittes des Zulaufquerschnittes des Retarders zu dessen Auslaufquerschnitt. Eine Antriebseinheit 1 umfaßt einen Motor 2, ein, hier im einzelnen nicht dargestelltes Getriebe und einen hydrodynamischen Retarder 4. Der Retarder 4 befindet sich mit dem Motor 2, insbesondere der Kurbelwelle, in ständiger Triebverbindung. Im dargestellten Fall steht der Retarder über ein Vorgelege 5 in ständiger Drehverbindung. Dem Retarder 4 und dem Motor 2 ist ein gemeinsamer Kühlmittelkreislauf 6 zugeordnet. Das Kühlmittel 7 des Kühlmittelkreislaufes 6 fungiert zugleich als Arbeitsmittel des Retarders 4. Der Retarder ist für eine ständige Vollfüllung mit Arbeitsmittel ausgelegt. Aufgrund der Anordnung des Retarders 4 in Kraftflußrichtung vor dem Getriebe bleibt der Retarder in allen Betriebszuständen mit dem Motor gekoppelt, weshalb er auch als Pumpe zur Umwälzung für das Kühlmittel 7 ausnutzbar ist und keine leistungsverzehrende und wärmebelastende Leerlaufventilationsleistung im Retarder anfällt. Im Kühlmittelkreislauf 6 ist ein Kühler 8 mit einem Ventilator 3 vorgesehen. der Ventilator 3 kann vom Motor 2 oder aber auch vom Retarder 4 angetrieben werden. Eine Leitung 9 führt dabei vom Austritt 10 des Kühlers 8 zum Flüssigkeitseintritt 11 in den Retarder 4, während eine Leitung 12 vom Flüssigkeitsaustritt 13 aus dem Retarder zum Flüssigkeitseintritt 14 in den Kühler 8 über den Motor 2 verläuft. In der Leitung 12 ist ein Ventil 15 vorgesehen, das es ermöglicht, den Leitungsquerschnitt der Leitung 12 im Ventilbereich, d.h. den Ventilqueerschnitt stufenlos von 7 - 0,5 gegenüber dem der Leitung 9 zu verändern. Im Traktionsbetrieb, d.h. bei nichtbetätigtem Retarder, arbeitet dieser als Umwälzpumpe für das Kühlmittel 7 im Kühlmittelkreislauf 6. Der Querschnitt der Leitung 9 bzw. der vom Ventil freigegebene Querschnitt ist in diesem Fall vorzugsweise gleich dem Querschnitt in der Leitung 12, d.h., daß das Ventil 15 in der Leitung 12 im Nicht-Bremsbetrieb einen großen freien Durchlaßquerschnitt aufweist, bei dem das geförderte Kühlmittel 7 unter geringem Gegendruck durch den Kühlmittelkreislauf 6 der Antriebseinheit 1 gefördert wird.

Im Bremsbetrieb gibt das Ventil 15 nur einen geringen Durchlaßquerschnitt für das zu fördernde Kühlmittel 7 frei.

Der Durchflußquerschnitt in der Leitung 9 zum Flüssigkeitseintritt 11 in den Retarder 4 ist vorzugsweise vier- bis siebenmal so groß wie der Durchflußquerschnitt am Flüssigkeitsaustritt 13 aus dem Retarder 4.

Das Kühlmittel wird somit am Ventil 15 durch eine drosselartige Verengung gedrückt, was im Retarder zum Aufbau eines Gegendruckes und somit zur Entwicklung eines Bremsmomentes führt. Bei Umschaltung vom Traktions- in den Bremsbetrieb kann dabei der Durchflußquerschnitt in der Leitung 12 aufgrund des Ventils 15 stufenlos gegenüber dem Durchflußquerschnitt in der Leitung 9 verringert werden.

Bei einer derartigen Anordnung eines Retarders 4 in einer Antriebseinheit 1 besteht auch die hier nicht dargestellte Möglichkeit, den Retarder 4 gleichfalls als Antrieb für den Ventilator 3 zu verwenden.

Das Ventil 15 ist hier als stufenlos verstellbares Drosselventil ausgeführt. Dies ermöglicht eine stufenlos variable Einstellung des Bremsmomentes. Es besteht jedoch auch die hier nicht dargestellte Möglichkeit einer stufenweisen Änderung des Bremsmomentes durch ein entsprechend ansteuerbares Ventil. Der Einsatz eines Ventiles, das nur zwei Schaltstellungen erlaubt, d.h. nur eine Querschnittsänderung ermöglicht ist ebenfalls denkbar. Diese letztgenannte Variante hat jedoch den Nachteil, daß entsprechend dem Füllungsgrad des Retarders bei einer bestimmten Motordrehzahl nur ein mögliches Bremsmoment erzeugt werden kann.

Es besteht jedoch auch die hier nicht dargestellte Möglichkeit, das Ventil 15 im Zulauf, d.h. der Leitung 9 vorzusehen. Der Querschnitt der Zufuhrleitung, d.h. Leitung 9, muß für diesen Fall jedoch 4 bis 7 fach so groß gewählt werden wie der Querschnitt der Abfuhrleitung 12. Im Pumpenbetrieb ist der Querschnitt der Zufuhrleitung zur Realisierung des erforderlichen Querschnittsverhältnisses zu verengen, um im wesentlichen gleiche Durchflußquerschnnitte in beiden Leitungen zu erzielen. Im Bremsbetrieb ist der Durchflußquerschnitt der Zufuhrleitung, d.h. der Leitung 9, derart zu vergrößern, daß dieser 4 bis 7fach so groß ist wie der Durchflußquerschnitt im Ablauf, d.h. Leitung 12, um einen Gegendruck am Pumpenretarder wirken zu lassen.

Die Figur 2 verdeutlicht eine weitere Möglichkeit einer erfindungsgemäßen Anordnung eines Retarders in einer Antriebseinheit, wobei die Steuerung des Bremsmomentes durch Verschiebung des Statorschaufelrades gegenüber dem Rotorschaufelrad des Retarders erfolgt. Die Antriebseinheit 1 ist im wesentlichen wie die Antriebseinheit 1 aus Figur 1 aufgebaut, weshalb für gleiche Elemente die gleichen Bezugszahlen verwendet werden. Die Antriebseinheit 1 umfaßt einen Motor 2, ein hier nicht dargestelltes Getriebe und einen Retarder 4. Der Retarder 4 steht in ständiger Drehverbindung, insbesondere der Kurbelwelle. Im dargestellten Fall steht der Retarder über ein Vorgelege 5 in ständiger Drehverbindung. Dem Motor 2 und dem Retarder 4 ist ein gemeinsamer Kühlmittelkreislauf 6 zugeordnet. Im Kühlmittelkreislauf ist ein Kühler 8 mit einem Ventilator 3 vorgesehen. Eine Leitung 9 verbindet den Kühleraustritt 10 mit dem Flüssigkeitseintritt 11 am Retarder 4. Eine Leitung 12 verbindet den Flüssigkeitsaustritt 13 am Retarder 4 mit dem Kühlereintritt 14 über den Motor 2. Die Steuerung des Bremsmomentes erfolgt hier durch Verschiebung des Statorschaufelrades gegenüber dem Rotorschaufelrad des Retarders. Eine Ventilanordnung 25 realisiert den Umschaltvorgang vom Nicht- zum Bremsbetrieb und umgekehrt. Die Ventialanordnung umfaßt die Ventile 26 und 27, wobei das Umschaltventil 26 im Bypass zum Ventil 27 angeordnet ist.

Das Umschaltventil 26 weist zwei Schaltstellungen auf, die es ermöglichen, das zwischen Flüssigkeitsaustritt 13 aus dem Retarder und dem Motor in einer ersten Schaltstellung des Umschaltventiles 26 ein maximaler Durchflußquerschnitt der Leitung 12 freigegeben wird, während in einer zweiten Schaltstellung des Umschaltventiles 26 eine drosselartige Verengung zwischen Retarder 4 und Motor 2 wirksam wird, die am Retarder einen starken Gegendruck hervorruft. Dazu ist das Ventil 26 beispielsweise als Zwei-Wege-Ventil ausgeführt. Das Ventil 27 ist nicht verstellbar.

Die erste Schaltstellung entspricht dabei dem Nicht-Bremsbetrieb, d.h. der Pumpenretarder fördert die Kühlmittelflüssigkeit 7 im Kühlkreislauf. Die zweite Schaltstellung entspricht dem Bremsbetrieb, d.h. der Pumpenretarder 4 erzeugt ein hohes Bremsmoment. In dieser Schaltstellung beträgt der Durchflußquerschnitt in der Leitung 9 das 4 bis 7fache des Durchflußquerschnittes in der Leitung 12, d.h., der Durchflußquerschnitt in der Leitung 12 ist wesentlich kleiner als der Durchflußquerschnitt in der Leitung 9.

Im Bremsbetrieb, hier dargestellt, sind das Statorschaufelrad 21 und das Rotorschaufelrad 22 zur Erzeugung eines maximalen Bremsmomentes koaxial zueinander angeordnet. Die Variation des Bremsmomentes kann durch Schwenken des Statorschaufelrades aus der koaxialen Lage zum Rotorschaufelrad erzielt werden.

Die Steuerung des Bremsmomentes im Bremsbetrieb erfolgt durch die Verschiebung des Statorschaufelrades 21 in eine exzentrische Lage zum Rotorschaufelrad 22 durch geeignete Mittel. Dazu ist es erforderlich, die Lagerung 30 des Statorschaufelrades außermittig anzuordnen. Möglichkeiten der Statorschaufelradverschiebung sind aus den folgenden Druckschriften bekannt:
1. DE 31 13 408 C1
2. DE 40 10 970 A1
Deshalb wird im einzelnen nicht darauf eingegangen.

Die Funktion der beiden Ventile 26 und 27 kann auch in einem Ventil zusammengefaßt werden.

Im Nichtbremsbetrieb wälzt der Pumpenretarder aufgrund der Rotorschaufelradrotation das Kühlmittel 7 im Kühlmittelkreislauf 6 um.

Die in den Figuren 1 und 2 dargestellten Möglichkeiten zur Realisierung der Verwendung des Retarders als Kühlmittelpumpe und der Möglichkeit der Änderung des Verhältnisses zwischen dem Zulaufquerschnitt des Retarders und dessen Auslaufquerschnitt zeichnen sich durch eine einfache konstruktive Umsetzung aus. Der steuerungs- und regelungstechnische Aufwand kann mit einer derartigen Anordnung minimal gehalten werden.

## Patentansprüche

1. Antriebseinheit
1.1 mit einem Motor und einem Getriebe;
1.2 mit einem hydrodynamischen Retarder;
1.3 der Retarder befindet sich mit dem Motor in ständiger Triebverbindung;
1.4 mit einem Kühlmittelkreislauf, dessen Kühlmittel zugleich Arbeitsmittel des Retarders ist;
1.5 der Retarder ist als Pumpe des Kühlmittels ausnutzbar; gekennzeichnet durch die folgenden Merkmale:
1.6 der Retarder ist für ständige Vollfüllung ausgelegt;
1.7 der Retarder ist dem Getriebe vorgeschaltet;
1.8 das Verhältnis des Zulaufquerschnittes (A_{Z}) des Retarders zu dessen Auslaufquerschnitt (A_{A}) liegt beim Bremsbetrieb zwischen 4 und 7 und beim Traktionsbetrieb zwischen 0,5 und 2.

2. Antriebseinheit nach Anspruch 1, dadurch gekennzeichnet, daß das Verhältnis zwischen A_{Z} und A_{A} stufenlos veränderbar ist.

3. Antriebseinheit nach Anspruch 1 oder 2, dadurch gekennzeichnet, daß der Rotor und der Stator relativ zueinander in eine exzentrische Lage gebracht werden können.
